# EUROPÄISCHE PATENTSCHRIFT

(11) **EP 2 607 026 B1**
(45) Veröffentlichungstag und Bekanntmachung des Hinweises auf die Patenterteilung: **09.03.2016**
(21) Anmeldenummer: 12008363.9
(22) Anmeldetag: 15.12.2012
(51) Int. Cl.: B25F 5/00

(54) **Elektrisches Arbeitsgerät mit einem elektrischen Verbraucher und einem Akkupack**
Electric tool with an electric consumer and a battery pack
Appareil de travail électrique avec un consommateur électrique et une batterie

(30) Priorität: 22.12.2011 DE 102011122057
(43) Veröffentlichungstag der Anmeldung: 26.06.2013
(73) Patentinhaber: Andreas Stihl AG & Co. KG, 71336 Waiblingen (DE)
(72) Erfinder: Reber, Volker, D-74544 Michelbach/Bilz (DE); Kolb, Joachim, D-71640 Ludwigsburg (DE)
(74) Vertreter: Wasmuth, Rolf

(56) Entgegenhaltungen:
- EP-A1- 1 769 699
- DE-U1-202010 012 151
- GB-A- 2 409 831

## Beschreibung

Die Erfindung betrifft ein elektrisches Arbeitsgerät mit einem elektrischen Verbraucher, der aus einem aufladbaren, in einem Gehäuse aufgenommenen Akkupack gespeist ist, nach dem Oberbegriff des Anspruchs 1.

Im privaten wie im professionellen Bereich finden immer häufiger mit Akkus betriebene Arbeitsgeräte Anwendung. Leistungsfähige Akkus wie chemisch auf Lithium basierende Akkus haben eine hohe Energiedichte, so dass auch anspruchsvollere, längere Arbeiten mit elektrischen Arbeitsgeräten ausgeführt werden können. So sind Akku-Heckenscheren, Akku-Motorsägen und Akku-Freischneider bekannt, die einen in das Gehäuse des Arbeitsgerätes eingeschobenen Akkupack aufweisen.

Ein solches elektrisches Arbeitsgerät ist in DE 20 2010012151 U1 offenbart.

Sollen größere Arbeiten mit Freischneidern oder Heckenscheren ausgeführt werden, müssen zur Erzielung von langen Betriebszeiten größere Akkupacks verwendet werden, die überwiegend getrennt vom elektrischen Arbeitsgerät vom Benutzer getragen werden. Dabei verbindet ein Anschlusskabel den vom Benutzer getragenen Akkupack mit dem elektrischen Verbraucher im Arbeitsgerät, wobei das Anschlusskabel über einen Anschlussstecker an den Akkupack angeschlossen ist. Der Kabelverlauf des Anschlusskabels ergibt sich dabei willkürlich, wobei er abhängig von den auszuführenden Arbeiten den Benutzer in der Freiheit seiner Bewegungen behindern oder einschränken kann. Bei einer derartigen Kabelführung wird der Anschlussstecker mechanisch an der Buchse oder dem Gehäuse gesichert, damit durch am Kabel auftretende Zugkräfte ein Lösen des Anschlusssteckers aus seiner Buchse am Akkupack verhindert ist.

Der Erfindung liegt die Aufgabe zugrunde, einen vom Benutzer getragenen Akkupack für einen elektrischen Verbraucher in einem Arbeitsgerät derart auszubilden, dass für den Benutzer eine ergonomisch vorteilhafte Kabelführung gegeben ist, die auch die an einem Anschlussstecker auftretenden Auszugskräfte vermindert.

Die Aufgabe wird nach den kennzeichnenden Merkmalen des Anspruchs 1 gelöst.

Der als rückentragbare Baueinheit ausgeführte Akkupack weist einen in seiner Gehäusewand ausgeformten Kabelkanal auf, der über einen Kabelaustritt im Gehäuserand des Akkupacks zum elektrischen Verbraucher des Arbeitsgeräts geführt ist. Dem Benutzer ist für die Ausführung einer Arbeit eine ergonomisch vorteilhafte Kabelführung konstruktiv vorgegeben, bei der das Anschlusskabel durch den Kabelaustritt vom Akkupack zum Verbraucher geführt ist. Durch die - nicht geradlinige - Führung in einem Kabelkanal ergeben sich bei einer äußeren Zugkraft auf das Kabel auch geringere Auszugskräfte am Anschlussstecker.

Vorteilhaft weist der rückentragbare Akkupack zumindest einen in seiner Gehäusewand ausgeformten Kabelkanal auf, der über unterschiedliche Kabelaustritte im Gehäuserand des Akkupacks ausmündet, so dass ein Anschlusskabel auf unterschiedlichen Wegen zum elektrischen Verbraucher des Arbeitsgeräts geführt werden kann. Der Benutzer hat vor Ausführung einer Arbeit die freie Wahl, welche der für ihn ergonomisch geeigneten Kabelführung er auswählt, um dann das Anschlusskabel durch den entsprechenden Kabelaustritt vom Akkupack zum Verbraucher zu führen.

Vorteilhaft ist der Kabelkanal als Nut ausgebildet, so dass bei einem Wechsel der Kabelführung das Anschlusskabel einfach entnommen und wieder eingelegt werden kann.

Als weitere Erfindung ist vorgesehen, den Kabelkanal in einem Bauraum zwischen einer Gehäusewand des Gehäuses und dem im Gehäuse angeordneten Zellpack anzuordnen und zur Außenfläche der Gehäusewand offen auszubilden. Dadurch ist der Querschnitt des Kabelkanals im Gehäuse des Akkupacks versenkt aufgenommen, ohne dass das Bauvolumen des Gehäuses vergrößert ist. Die Zugänglichkeit des Kabelkanals von außerhalb des Gehäuses ist weiter gewährleistet.

Die Gehäusewand ist vorzugsweise eine Rückenplatte des Gehäuses, wobei ein Kabelkanal in der Rückenplatte selbst ausgeformt ist. Vorteilhaft ist die Rückenplatte dem Rücken eines Benutzers angepasst geformt, z. B. gewölbt; dabei bildet sich zwischen den im Gehäuse gehaltenen Zellpacks des Akkupacks und der Innenwand des Gehäuses ein Leerraum aus, der als Bauraum das Volumen eines Kabelkanals aufnimmt. So ist in einfacher Weise ein Kabelkanal in dem Bauraum zwischen der Außenfläche der Rückenplatte und dem im Gehäuse angeordneten Zellpack aufgenommen und zur Außenfläche der Rückenplatte als offene Nut gestaltet, damit das Umlegen des Anschlusskabels von einem Kabelaustritt zu einem anderen in einfacher Weise möglich ist.

Vorteilhaft ist der Bauraum ein Leerraum; es kann auch zweckmäßig sein, den Leerraum als materialgefüllten Raum vorzusehen, z. B. durch entsprechende Auslegung der Rückenplatte. Der Querschnitt des Kabelkanals liegt dann - bis auf seine offene Seite - vollständig im Material eingebettet.

In der Rückenplatte ist ferner ein elektrischer Anschlusskasten versenkt vorgesehen, wobei der Kabelkanal vorteilhaft vom Anschlusskasten ausgehend bis zum Kabelaustritt im Bereich des Gehäuserandes in der Rückenplatte versenkt verläuft. Das zwischen dem Rücken des Benutzers und dem Gehäuse des Akkupacks geführte Kabel liegt somit vollständig innerhalb der Außenkontur des Gehäuses des Akkupacks, so dass unabhängig von der Wahl des Kabelaustritts der Benutzer keine störenden Kabelabschnitte spürt.

Um eine geeignete Auswahl der möglichen Führungen des Anschlusskabels zu haben, ist vorgesehen, mehrere Kabelaustritte in einer Schmalseite des Gehäuses auszubilden. So können mehrere Kabelaustritte in einer seitlichen Hochseite des Gehäuses angeordnet werden, wodurch die Kabelführung einfach an die Größe eines Benutzers angepasst werden kann.

Liegen auf beiden Seiten der vertikalen Längsachse der Rückenplatte zumindest jeweils ein Kabelaustritt im Rand des Gehäuses, kann die Führung des Anschlusskabels in einfacher Weise für Rechts- oder für Linkshänder umgerüstet werden.

Der in den Kabelaustritt im Bereich der Hochseiten des Gehäuses mündende Endabschnitt eines Kabelkanals liegt unter einem Austrittswinkel ungleich 90° zur Hochseite selbst. Zweckmäßig ist der Austrittswinkel kleiner als 90°, vorzugsweise etwa 45° gewählt und liegt mit seiner Winkelöffnung dem Boden des Gehäuses zugewandt, so dass das im Kabelkanal durch den Austritt herausgeführte Anschlusskanal der Schwerkraft folgend nach unten verläuft und so leicht unter dem Arm eines Benutzer hindurchgeführt werden kann.

Der Kabelkanal ist vorteilhaft so ausgebildet, dass er sich in Richtung zur Schmalseite des Gehäuses über eine Abzweigung zu einem weiteren Kabelaustritt verzweigt. Will der Benutzer einen anderen Kabelaustritt wählen, so braucht das Anschlusskabel nur bis zur Abzweigung aus dem Kabelkanal herausgelöst werden und nicht über dessen gesamte Länge. In besonderer Ausgestaltung verlaufen die Endabschnitte der Kanäle zu den Kabelaustritten in einer Hochseite zueinander etwa parallel.

Alle auf einer Längsseite liegenden Kabelaustritte im Gehäuserand des Akkupacks münden jeweils in einen gemeinsamen Kabelkanal. Beim Umlegen des Anschlusskabels in einen anderen Kabelaustritt auf der gleichen Seite der Längsachse muss das Anschlusskabel nur über eine Teillänge aus dem Kabelkanal gelöst werden.

Alle im Rand einer seitlichen Hochseite liegenden Kabelaustritte liegen unterhalb einer Mittelebene der Rückenplatte, verlaufen also - abhängig von der Größe des Benutzers - etwa im Bereich des Ellenbogens eines Benutzers und liegen somit ergonomisch günstig.

Der elektrische Anschlusskasten mit einer Elektronik und dem Anschlussstecker des Anschlusskabels ist im oberen Endbereich der Rückenplatte unterhalb der dem Boden des Gehäuses gegenüberliegenden oberen Schmalseite des Gehäuses angeordnet. Dadurch liegt die Elektronik mit einem ausreichenden Abstand über dem Boden, so dass Verschmutzungen, Spritzwasser usw. nicht zu Beeinträchtigungen der elektrischen Anschlüsse führen können. Ferner wird durch die Lage des Anschlusskastens eine entsprechende Länge des Anschlusskabels im Kabelkanal geführt, wodurch eine Zugentlastung des Anschlusssteckers im Anschlusskasten erzielt ist. Im Falle eines Sturzes des Arbeitsgerätes wird darüber hinaus zunächst das Anschlusskabel aus dem Kabelkanal gezogen, so dass mechanische Kräfte abgebaut werden.

Um eine sichere Fixierung des Anschlusskabels in dem nutförmigen Kabelkanal zu gewährleisten, ist vorgesehen, auf den Kanalwänden des Kabelkanals Klemmstege auszubilden. Dabei liegen die Klemmstege der einen Kanalwand zu den Klemmstegen der gegenüberliegenden Kanalwand versetzt, wodurch eine gute Klemmung des Anschlusskabels erzielt ist, ohne dass die Kräfte zum Herausheben des Kabels aus dem Kabelkanal zwecks Wahl eines anderen Kabelaustritts zu groß werden.

Vorteilhaft ist der Boden des Gehäuses des Akkupacks als stabiler Standfuß ausgebildet, so dass der Benutzer den Akkupack sicher senkrecht auf dem Boden abstellen kann.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: eine schematische Darstellung eines elektrischen Arbeitsgerätes mit einem rückentragbaren Akkupack,
- Fig. 2: eine Ansicht auf einen Akkupack von hinten,
- Fig. 3: eine perspektivische Ansicht auf den Akkupack nach Fig. 2,
- Fig. 4: eine Draufsicht auf die Rückenplatte des Akkupacks nach Fig. 3,
- Fig. 5: eine Ansicht auf eine Hochseite des Akkupacks gemäß Pfeil V in Fig. 2,
- Fig. 6: eine Ansicht auf die andere Hochseite des Akkupacks gemäß Pfeil VI in Fig. 2,
- Fig. 7: eine Draufsicht auf den Boden des Akkupacks gemäß Pfeil VII in Fig. 2.

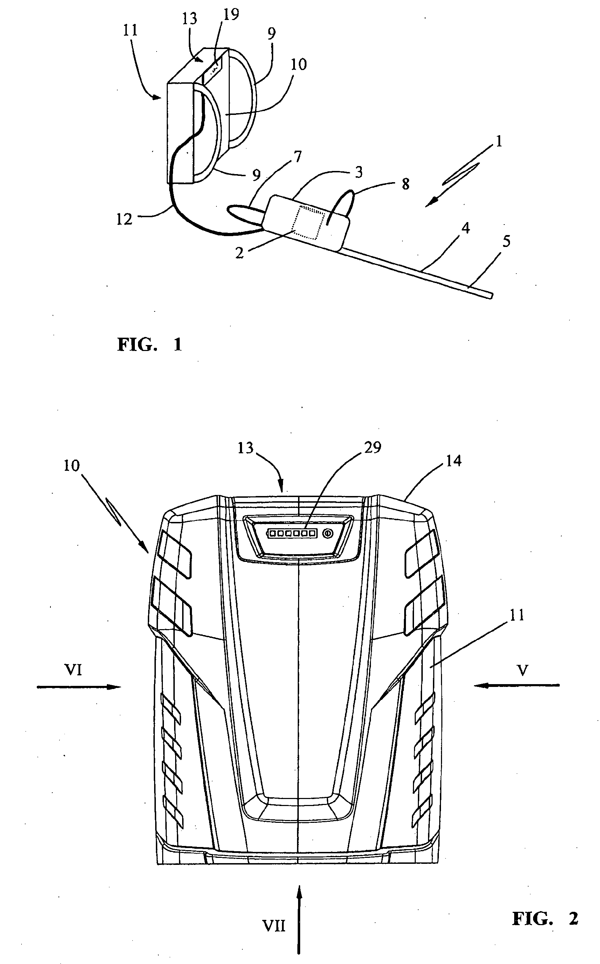

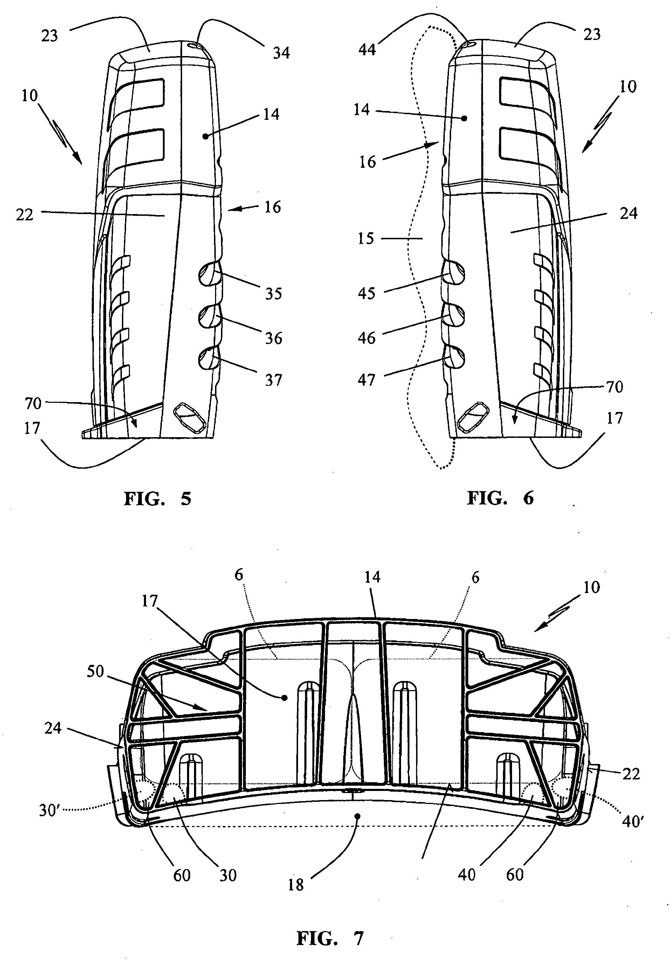

Der in den Figuren 2 bis 7 dargestellte Akkupack 10 ist für ein elektrisches Arbeitsgerät 1 vorgesehen, wie es beispielhaft in Fig. 1 dargestellt ist. Im gezeigten Ausführungsbeispiel ist das Arbeitsgerät eine elektrische Heckenschere mit einem elektrischen Antriebsmotor 2, der den elektrischen Verbraucher 3 bildet. Der elektrische Antriebsmotor 2 des dargestellten Arbeitsgeräts 1 ist an dem einen Ende eines Messerbalkens 4 angeordnet, das als Werkzeug zwei hin- und hergehende Messerblätter 5 aufweist. Das Gehäuse des Arbeitsgerätes 1 weist einen Griff als vorderen Handgriff 7 und einen weiteren Griff als hinteren Handgriff 8 auf, über die ein Benutzer das elektrische Arbeitsgerät 1 führt. Zur Spannungsversorgung des elektrischen Verbrauchers 3 ist der Akkupack 10 vorgesehen, der als rückentragbare Baueinheit 11 ausgebildet ist und mit Tragriemen 9 auf dem Rücken 15 (Fig. 6) eines Benutzers festgelegt wird. Der Akkupack 10 ist über ein elektrisches Anschlusskabel 12 mit dem elektrischen Verbraucher 3 des Arbeitsgerätes 1 verbunden, wobei das Anschlusskabel 12 auf der Seite des Akkupacks 10 mit einem Ende in einem Anschlusskasten 13 angeschlossen ist.

Als Arbeitsgerät 1 kann anstelle einer Heckenschere auch ein Blasgerät, eine Motorkettensäge, ein Freischneider, ein Hochentaster, ein Trennschleifer oder dgl. Gerät an den Akkupack 10 angeschlossen werden.

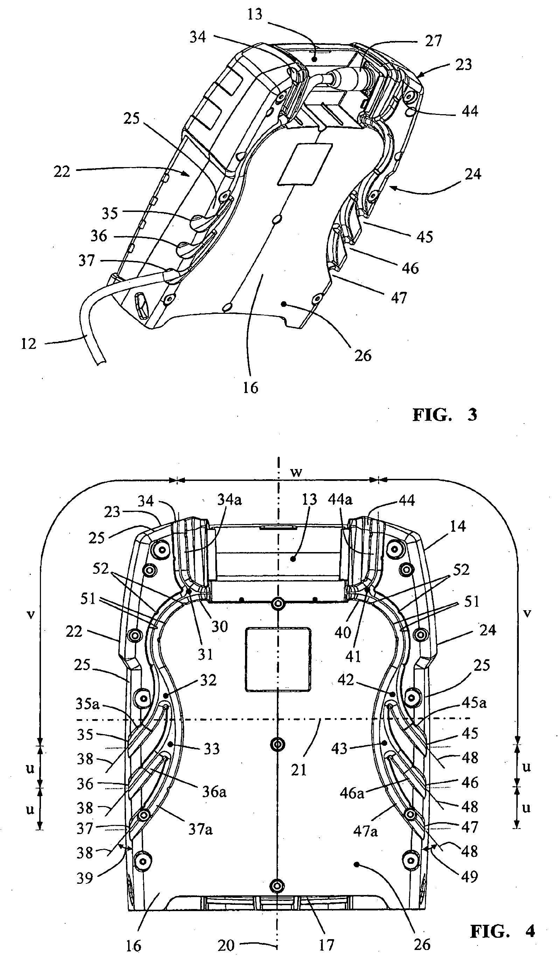

Das Gehäuse 14 des Akkupacks 10 ist als vom elektrischen Verbraucher 3 getrennte Baueinheit 11 ausgeführt und besteht im Wesentlichen aus einer dem Rücken 15 eines Benutzers (Fig. 6) zugewandten Rückenplatte 16 (Figuren 3 und 4), die etwa rechtwinklig zu einem Boden 17 des Gehäuses 14 liegt. Die Rückenplatte 16 ist - wie Fig. 7 zeigt - leicht nach innen gewölbt und bildet eine anatomisch angepasste Auflage 18 für den Rücken 15 eines Benutzers; zum Benutzer hin ist die Rückenplatte 16 vollständig geschlossen, weist also keine Durchbrüche oder Öffnungen für Kühlluft o. dgl. auf. Die Rückenplatte 16 hat eine etwa rechteckförmige Grundform, deren Längsmittelachse 20 senkrecht zum Boden 17 liegt und eine vertikale Hochachse bildet. Orthogonal zur vertikalen Längsmittelachse 20 liegt eine horizontale Mittelebene 21 der Rückenplatte 16. Der in das Gehäuse 14 eingesetzte Akkupack 10 besteht aus quaderförmigen Zellpacks 6 (Fig. 7), die in entsprechende Aufnahmeräume des Gehäuses 14 eingesetzt und darin gehalten sind. Die Zellpacks 6 bilden gegenüber der gewölbten Rückenplatte 16 eine im Wesentlichen ebene Fläche 16, so dass sich zwischen der Rückenplatte 16 und den Zellpacks 6 Leerräume ausbilden, die im Rahmen einer weiteren Erfindung als Bauraum 60 zur Aufnahme von Kabelkanälen genutzt werden können, wie nachfolgend beschrieben wird. Im Ausführungsbeispiel ist der Bauraum 60 frei von Material, also ein Leerraum; es kann vorteilhaft sein, den Leerraum mit Material zu füllen, indem z. B. die Rückenplatte 16 in den entsprechenden Randbereichen verdickt ausgeführt ist.

Die sich parallel zur Längsmittelachse 20 erstreckenden Hochseiten 22 und 24 bilden erste Schmalseiten des Gehäuses 14; die Hochseiten 22 und 24 sind an ihren Enden einerseits über den Boden 17 und andererseits über eine obere Schmalseite 23 miteinander verbunden. Zwischen der Rückenplatte 16 und den Schmalseiten (Hochseiten 22, 24, obere Schmalseite 23 und Boden 17) ist ein erster Rand 25 des Gehäuses 14 ausgebildet, der nachfolgend auch als Gehäuserand bezeichnet ist.

Um dem Benutzer eine frei wählbare, ergonomisch geeignete Kabelführung zu ermöglichen, sind in einer Gehäusewand des Gehäuses 14, im Ausführungsbeispiel in der Rückenplatte 16 des Akkupacks 10, Kabelkanäle 30, 40 (Fig. 4) ausgebildet, die im Ausführungsbeispiel als offene, U-förmige Nuten gestaltet sind. Nach einer weiteren eigenständigen Erfindung sind die Kabelkanäle 30, 40 dabei so verlegt, dass sie in dem freien Bauraum 60 zwischen der Rückenplatte 16 und den Zellblöcken 6 des Akkupacks 10 liegen, so dass das Volumen eines jeden Kanals vorzugsweise vollständig im Bauraum 60 aufgenommen ist. Ist der Bauraum 60 ein freier, leerer Bauraum, ragen die Kanäle in diesen ein. Ist der Bauraum 60 ein gefüllter Bauraum, z. B. mit dem Material der Rückenplatte 16 oder mit einem anderen Material gefüllt, ist der Kabelkanal in dem Material aufgenommen, vorzugsweise vollständig aufgenommen. Ferner ist jede Nut zweckmäßig im Wesentlichen über ihre gesamte Länge zu der dem Rücken 15 des Benutzers zugewandt liegenden Außenfläche 26 der Rückenplatte 16 offen. Bevorzugt ist der Querschnitt des offenen Kabelkanals 30, 40 gerundet, insbesondere der Form des Anschlusskabels 12 entsprechend gestaltet.

Allgemein besteht die weitere Erfindung darin, einen aufgrund der Bauform des Gehäuses 14, der Anpassung des Gehäuses 14 an den Rücken eines Benutzers und den im Gehäuse 14 des Akkupacks 10 gehaltenen Zellpacks sich ergebenden Freiraum als Bauraum 60 für die Ausbildung eines Kabelkanals 30, 40 zu nutzen. So kann ein Kabelkanal 30' oder 40' in einem Bauraum 60 zwischen einer Gehäusewand (z. B. einer Seitenwand 22, 24) des Gehäuses 14 und dem im Gehäuse 14 angeordneten Zellpacks 6 aufgenommen sein. Vorteilhaft wird der Bauraum 60 für Kabelkanäle 30, 40 genutzt, der sich aufgrund der anatomischen Wölbung der Rückenplatte 16 zwecks Anpassung an den Benutzer konstruktiv ergibt.

Ein Kabelkanal 30, 40 mündet im Rand 25 des Gehäuses 14 als Kabelaustritt 34 bis 37 bzw. 44 bis 47, wobei in Umfangsrichtung des Gehäuserandes 25 gemessen die Kabelaustritte 34 bis 37 und 44 bis 47 mit einem. Abstand u, v oder w zueinander liegen. Jeder Kabelkanal 30,40 verläuft aus dem Anschlusskasten 13 bis zum jeweiligen Kabelaustritt in der Rückenplatte 16 versenkt. Dabei sind vorteilhaft mehrere Kabelaustritte 34 bis 37 bzw. 44 bis 47 über den Umfang des Gehäuserandes 25 vorgesehen.

So liegen in einer Schmalseite des Gehäuses mehrere Kabelaustritte, z. B. in der oberen Schmalseite 23 zwei Kabelaustritte 34 und 44 mit Abstand w zueinander; in der einen langen Schmalseite des Gehäuses 14, der Hochseite 22, liegen drei Kabelaustritte 35, 36, 37 mit einem Abstand u zueinander und in der anderen Hochseite 24 die Kabelaustritte 45, 46 und 47 ebenfalls mit einem Abstand u zueinander. Dabei ist gemäß dem Ausführungsbeispiel vorgesehen, dass in den Hochseiten 22 und 24 jeweils drei Kabelaustritte 35 bis 37 bzw. 45 bis 47 ausgebildet sind; es kann zweckmäßig sein, mehr als drei Kabelaustritte oder auch weniger auszubilden.

Nach einer Weiterbildung der Erfindung ist vorgesehen, dass sich jeder Kabelkanal 30, 40 auf seiner Länge zu den Kabelaustritten 34 bis 37 bzw. 44 bis 47 verzweigt. So weist der Kabelkanal 30 kurz nach dem Austritt aus dem Anschlusskasten 13 eine erste Abzweigung 31 auf, dessen Abzweigkanal über einen Endabschnitt 34a in den Kabelaustritt 34 im Gehäuserand 25 der oberen Schmalseite 23 mündet. Nach der Abzweigung 31 verläuft der verbleibende Kabelkanal 30 in einem S-förmigen Bogen in Richtung zum Boden 17 des Gehäuses 14 und endet am Kabelaustritt 37 im Gehäuserand 25 der Hochseite 22. Von dem S-förmigen Kabelkanal 30 zweigt etwa auf Höhe der Mittelebene 21 eine weitere Abzweigung 32 ab, die einen weiteren Abzweigkanal über einen Endabschnitt 35a zum Kabelaustritt 35 führt. Entsprechend ist eine weitere in Längsrichtung des Kabelkanals 30 folgende Abzweigung 33 vorgesehen, um über einen nächsten Abzweigkanal und einen Endabschnitt 36a zum Kabelaustritt 36 im Gehäuserand 25 der Hochseite 22 zu führen.

Entsprechend ist der Kabelkanal 40 über Abzweigungen 41,42 und 43 und Abzweigkanäle und deren Endabschnitte 44a, 45a, 46a und 47a zu den Kabelaustritten 44, 45, 46 und 47 auf der anderen Seite der Längsmittelachse 20 der Rückenplatte 16 geführt.

Die Anordnung gemäß dem Ausführungsbeispiel ist so ausgebildet, dass auf beiden Seiten der vertikalen Längsmittelachse 20 zumindest ein Kabelaustritt im Rand 25 des Gehäuses 14 vorgesehen ist. Gemäß Fig. 4 ist sowohl in der oberen Schmalseite 23 auf beiden Seiten der Längsmittelachse 20 je ein Kabelaustritt 34 und 44 vorgesehen als auch in den Hochseiten 22 und 24, in denen jeweils drei Kabelaustritte 35, 36 und 37 bzw. 45, 46 und 47 vorgesehen sind.

Die Endabschnitte 35a, 36a, 37a bzw. 45a, 46a, 47a der Kabelkanäle 30, 40 liegen zueinander etwa parallel, wobei die Längsachsen 38 der Endabschnitte einen Austrittswinkel 39 zur Hochseite 22 aufweisen, der ungleich 90° ist. Wie in Fig. 4 gezeigt, öffnet der Austrittswinkel 39 in Richtung zum Boden 17 des Gehäuses 14 und ist kleiner als 90° ausgebildet, vorzugsweise mit etwa 45° gewählt.

In entsprechender Weise liegen die Längsachsen 48 der Endabschnitte 45a, 46a und 47a des Kabelkanals 40 auf der anderen Seite der vertikalen Längsmittelachse 20 etwa parallel zueinander und unter einem Austrittswinkel 49 zur Hochseite 24, dessen Winkelöffnung zum Boden 17 liegt und im Ausführungsbeispiel vorzugsweise etwa 45° beträgt.

Wie Fig. 4 ferner zeigt, liegen die im Gehäuserand 25 der Hochseiten 22 und 24 vorgesehenen Kabelaustritte 35, 36, 37 und 45, 46, 47 unterhalb der Mittelebene 21, also im unteren Bereich der Rückenplatte 16. Alle Kabelaustritte 34, 35, 36, 37 und 47 auf einer Seite der vertikalen Längsmittelachse 20 bzw. alle Kabelaustritte 44, 45, 46 auf der anderen Seite der vertikalen Längsmittelachse 20 münden in je einen gemeinsamen Kabelkanal 30 bzw. 40, der unmittelbar aus dem Anschlusskasten 13 entspringt.

Der Anschlusskasten 13, der - vgl. Fig. 1 - durch einen Deckel 19 verschlossen ist, nimmt einen Anschlussstecker 27 des Anschlusskabels 12 vollständig auf. Im Anschlusskasten 13 kann ferner eine zur Überwachung oder zur Kapäzitätsanzeige des Akkupacks 10 vorgesehene Elektronik angeordnet sein. Eine Überwachungselektronik ist immer dann zweckmäßig, wenn der Akkupack aus Lithium-Ionen-Zellen oder dgl. chemisch auf Lithium basierenden Einzelzellen besteht.

Der elektrische Anschlusskasten 13 ist im oberen Endbereich der Rückenplatte 16 unterhalb der oberen Schmalseite 23 vorgesehen, wobei sich die Öffnung des Anschlusskastens 13 in der oberen Schmalseite 23 wie in der Rückenplatte 16 erstreckt. Auf beiden Seiten des Anschlusskastens 13 ist je ein Kabelaustritt 34 bzw. 44 vorgesehen.

Die Gestalt der Kabelkanäle 30, 40 ermöglicht es dem Benutzer, das Anschlusskabel 12 an einer für ihn ergonomisch geeigneten Stelle vom Akkupack 10 zum elektrischen Verbraucher 3 zu führten. Wird z. B. ein Freischneider nach Fig. 1 genutzt, ist es vorteilhaft, das Anschusskabel 12 unterhalb des Ellenbogens des Benutzerarms zum Motor zu führen, wozu sich - je nach Größe des Benutzers - die Kabelaustritte 35, 36, 37 bzw. 45, 46, 47 eignen. Da die Kabelaustritte auf beiden Seiten der Längsachse 20 vorgesehen sind, ist eine ergonomische Führung des Anschlusskabels sowohl für Rechts- als auch für Linkshänder gewährleistet.

Wird mit dem Akkupack z. B. eine elektrische Astschere betrieben und muss der Benutzer im Wesentlichen über Kopf arbeiten, so kann das Anschlusskabel 12 über die Kabelaustritte 34 und 44 vom Akkupack 10 zum elektrischen Verbraucher 3 geführt werden, wodurch auch für Überkopf-Arbeiten eine ergonomisch günstige Kabelführung gewährleistet ist.

Die Rückenplatte 16 bildet mit dem Boden 17 eine etwa L-förmige Grundform, wobei der Boden 17 zur Aufnahme auftretender Belastungen mit einer Verrippung 50 versehen ist, die- wie Fig. 7 zeigt -, nach unten offen ist. Der Boden 17 bildet einen stabilen Standfuß 70, auf den der Akkupack 10 senkrecht abgestellt werden kann. Der Standfuß 70 gewährleistet ein sicheres Abstellen durch den Benutzer in der Traglage des Akkupacks 10.

Um den Ladezustand des rückentragbaren Akkupacks 10 anzuzeigen, ist in dem dem Rücken 15 des Benutzers abgewandt liegenden Gehäusedeckel des Gehäuses 14 eine balkenförmige Ladezustandsanzeige 29 vorgesehen, die auf Höhe des Anschlusskastens 13 liegt. Auf diese Weise kann die entsprechende Elektronik nahe der Ladezustandsanzeige 29 im Anschlusskasten 13 angeordnet werden. Die Anzeige kann auch als Display, z. B. LCD Display, ausgebildet sein, aus einzelnen optischen Anzeigen wie z. B. LED's aufgebaut sein oder auch akustische Anzeigen umfassen, wenn z. B. die Restkapazität des Akkupacks einen vorgegebenen Schwellwert unterschreitet.

Um das in einem vom Benutzer ausgewählten Abschnitt des Kabelkanals 30 bzw. 40 geführte Anschlusskabel 12 zu fixieren, sind an gegenüberliegenden Kanalwänden 51 des Kabelkanals 30 bzw. 40 Klemmstege 52 ausgebildet. Die Klemmstege verlaufen zweckmäßig über die Höhe des Kanals, wobei die Klemmstege 52 der einen Kanalwand 51 zu den Klemmstegen 52 der gegenüberliegenden Kanalwand 51 versetzt liegen. Derartige Klemmstege 52 sind verteilt über die gesamte Länge eine Kabelkanals 30, 40 und dessen Abzweigkanäle bis zu den Kabelaustritten 34, 35, 36, 37 bzw. 44, 45, 46, 47 vorgesehen.

## Patentansprüche

1. Elektrisches Arbeitsgerät mit einem elektrischen Verbraucher (3), der aus einem aufladbaren, in einem Gehäuse (14) aufgenommenen Akkupack (10) gespeist ist, wobei der elektrische Verbraucher (3) über ein elektrisches Anschlusskabel (12) mit dem Akkupack (10) verbunden ist,
**dadurch gekennzeichnet, dass** das Gehäuse (14) mit dem Akkupack (10) als vom elektrischen Verbraucher (3) getrennte, rückentragbare Baueinheit (11) ausgeführt ist, die eine Gehäusewand mit einem darin ausgeformten Kabelkanal (30, 40) aufweist, wobei der Kabelkanal (30, 40) im Rand (25) des Gehäuses (14) einen Kabelaustritt (34, 35, 36, 37; 44, 45, 46, 47) aufweist.

2. Arbeitsgerät nach Anspruch 1,
**dadurch gekennzeichnet, dass** im Rand (25) des Gehäuses (14) zumindest zwei Kabelaustritte (34 bis 37 und 44 bis 47) vorgesehen sind, die mit einem in Umfangsrichtung des Gehäuserandes (25) gemessenen Abstand (u, v, w) zueinander liegen.

3. Arbeitsgerät nach Anspruch 1 oder 2,
**dadurch gekennzeichnet, dass** der Kabelkanal (30, 40) als Nut ausgebildet ist.

4. Arbeitsgerät nach einem der Ansprüche 1 bis 3,
**dadurch gekennzeichnet, dass** der Kabelkanal (30, 40) in einem Bauraum (60) zwischen einer Rückenplatte (16) des Gehäuses (14) und dem im Gehäuse (14) angeordneten Zellpack (6) aufgenommen und zur Außenfläche (26) der Gehäusewand offen ist.

5. Arbeitsgerät nach Anspruch 4,
**dadurch gekennzeichnet, dass** der Kabelkanal (30, 40) in der Rückenplatte (16) liegt.

6. Arbeitsgerät nach Anspruch 4 und 5,
**dadurch gekennzeichnet, dass** der Kabelkanal (30, 40) in einem Bauraum (60) zwischen der Außenfläche (26) der Rückenplatte (16) und dem im Gehäuse (14) des Akkupacks (10) angeordneten Zellpack (6) aufgenommen und zur Außenfläche (26) der Rückenplatte (16) offen ist.

7. Arbeitsgerät nach einem der Ansprüche 4 bis 6,
**dadurch gekennzeichnet, dass** der Bauraum (60) ein Leerraum ist.

8. Arbeitsgerät nach einem der Ansprüche 5 bis 7,
**dadurch gekennzeichnet, dass** in der Rückenplatte (16) ein elektrischer Anschlusskasten (13) versenkt vorgesehen ist und der Kabelkanal (30, 40) vom Anschlusskasten (13) bis zum Kabelausritt (34 bis 37 und 44 bis 47) vorzugsweise in der Rückenplatte (16) versenkt verläuft.

9. Arbeitsgerät nach einem der Ansprüche 2 bis 8,
**dadurch gekennzeichnet, dass** mehrere Kabelaustritte (34 bis 37 und 44 bis 47) in einer Schmalseite des Gehäuses (14) liegen, wobei vorzugsweise die mehreren Kabelaustritte (35 bis 37, 45 bis 47) in der Hochseite (22, 24) des Gehäuses (14) liegen.

10. Arbeitsgerät nach einem der Ansprüche 5 bis 8,
**dadurch gekennzeichnet, dass** die Rückenplatte (16) eine vertikale Längsmittelachse (20) aufweist und auf beiden Seiten der Längsmittelachse (20) zumindest ein Kabelaustritt (34 bis 37, 44 bis 47) im Rand (25) des Gehäuses (14) vorgesehen ist.

11. Arbeitsgerät nach einem der Ansprüche 1 bis 10,
**dadurch gekennzeichnet, dass** ein in den Kabelaustritt (35 bis 37, 45 bis 47) mündender Endabschnitt (35a,36a, 37a; 45a, 46a, 47a) unter einem Austrittswinkel (39, 49) ungleich 90° zur Hochseite (22, 24) liegt, wobei vorzugsweise der Austrittswinkel (39, 49) kleiner 90° ist, insbesondere etwa 45° ist und mit seiner Winkelöffnung dem Boden (17) des Gehäuses (14) zugewandt liegt.

12. Arbeitsgerät nach einem der Ansprüche 1 bis 11,
**dadurch gekennzeichnet, dass** sich der Kabelkanal (30,40) in Richtung zur Schmalseite des Gehäuses (14) über eine Abzweigung (31, 32, 33; 41, 42, 43) zu einem weiteren Kabelaustritt (34, 35, 36; 44, 45, 46) verzweigt.

13. Arbeitsgerät nach Anspruch 12,
**dadurch gekennzeichnet, dass** zumindest die in die Kabelaustritte (35, 36, 37; 45, 46, 47) mündenden Endabschnitte (35a, 36a, 37a, 45a, 46a, 47a) des Kabelkanals (30,40) zueinander etwa parallel verlaufen.

14. Arbeitsgerät nach Anspruch 12 oder 13,
**dadurch gekennzeichnet, dass** alle Kabelaustritte (34 bis 37 bzw. 44 bis 47) auf einer Seite einer vertikalen Längsmittelachse (20) einer Rückenplatte (16) mit einem gemeinsamen Kabelkanal (30, 40) verbunden sind.

15. Arbeitsgerät nach Anspruch 9,
**dadurch gekennzeichnet, dass** alle im Rand (25) des Gehäuses (14) in einer seitlichen Hochseite (22, 24) liegenden Kabelaustritte (35 bis 37 und 45 bis 47) unterhalb einer Mittelebene (21) einer Rückenplatte (16) liegen.

16. Arbeitsgerät nach Anspruch 8,
**dadurch gekennzeichnet, dass** das Gehäuse (14) einen Boden (17) aufweist und der elektrische Anschlusskasten (13) im oberen Endbereich der Rückenplatte (16) unterhalb der dem Boden (17) gegenüberliegenden, oberen Schmalseite (23) des Gehäuses (14) angeordnet ist, wobei vorzugsweise in der oberen Schmalseite (23) auf beiden Seiten des Anschlusskastens (13) je ein Kabelaustritt (34, 44) ausgebildet ist.

17. Arbeitsgerät nach einem der Ansprüche 1 bis 16,
**dadurch gekennzeichnet, dass** auf den Kanalwänden (51) des Kabelkanals (30, 40) Klemmstege (52) ausgebildet sind, wobei insbesondere die Klemmstege (52) der einen Kanalwand (51) zu den Klemmstegen (52) der gegenüberliegenden Kanalwand (51) versetzt liegen.

18. Arbeitsgerät nach einem der Ansprüche 1 bis 17,
**dadurch gekennzeichnet, dass** das Gehäuse (14) des Akkupacks (10) einen als Standfuß (70) ausgebildeten Boden aufweist.

## Claims

1. Electric working implement with an electric load (3) supplied from a chargeable battery pack (10) accommodated in a housing (14), wherein the electric load (3) is connected to the battery pack (10) via an electric connecting cable (12),
**characterised in that** the housing (14) with the battery pack (10) is designed as a unit (11) which is separate from the electric load (3) and can be carried on the back, and which comprises a housing wall with a cable channel (30, 40) formed therein, the cable channel (30, 40) having a cable exit (34, 35, 36, 37; 44, 45, 46, 47) in the edge (25) of the housing (14).

2. Working implement according to claim 1,
**characterised in that** at least two cable exits (34 to 37 and 44 to 47), which are arranged at a distance (u, v, w) from one another as measured in the circumferential direction of the housing edge (25), are provided in the edge (25) of the housing (14).

3. Working implement according to claim 1 or 2,
**characterised in that** the cable channel (30, 40) is designed as a groove.

4. Working implement according to any of claims 1 to 3,
**characterised in that** the cable channel (30, 40) is accommodated in an installation space (60) between a back plate (16) of the housing (14) and the cell pack (6) installed into the housing (14) and is open towards the outer surface (26) of the housing wall.

5. Working implement according to claim 4,
**characterised in that** the cable channel (30, 40) is located in the back plate (16).

6. Working implement according to claims 4 and 5,
**characterised in that** the cable channel (30, 40) is accommodated in an installation space (60) between the outer surface (26) of the back plate (16) and the cell pack (6) installed in the housing (14) of the battery pack (10) and is open towards the outer surface (26) of the back plate (16).

7. Working implement according to any of claims 4 to 6,
**characterised in that** the installation space (60) is an empty space.

8. Working implement according to any of claims 5 to 7,
**characterised in that** an electric terminal box (13) is recessed into the back plate (16), and **in that** the cable channel (30, 40) running from the terminal box (13) to the cable exit (34 to 37 and 44 to 47) is preferably recessed into the back plate (16).

9. Working implement according to any of claims 2 to 8,
**characterised in that** several cable exits (34 to 37 and 44 to 47) are located in a narrow side of the housing (14), the several cable exits (34 to 37 and 44 to 47) being preferably located in the high side (22, 24) of the housing (14).

10. Working implement according to any of claims 5 to 8,
**characterised in that** the back plate (16) has a vertical longitudinal central axis (20), and **in that** at least one cable exit (34 to 37 and 44 to 47) is provided in the edge (25) of the housing (14) on both sides of the longitudinal central axis (20).

11. Working implement according to any of claims 1 to 10,
**characterised in that** an end section (35a, 36a, 37a; 45a, 46a, 47a) terminating into the cable exit (34 to 37 and 44 to 47) lies at an exit angle (39, 49) unequal to 90 degrees to the high side (22, 24), the exit angle (39, 49) being preferably less than 90 degrees, in particular approximately 45 degrees, and the angle opening facing the base (17) of the housing (14).

12. Working implement according to any of claims 1 to 11,
**characterised in that** the cable channel (30, 40) branches towards the narrow side of the housing (14) via a branch (31, 32, 33; 41, 42, 43) into a further cable exit (34, 35, 36; 44, 45, 46).

13. Working implement according to claim 12,
**characterised in that** at least the end sections (35a, 36a, 37a; 45a, 46a, 47a) of the cable channel (30, 40) which terminate into the cable exits (34 to 37 and 44 to 47) extend approximately parallel to one another.

14. Working implement according to claim 12 or 13,
**characterised in that** all cable exits (34 to 37 and 44 to 47) are connected to a common cable channel (30, 40) on one side of a vertical longitudinal central axis (20) of a back plate (16).

15. Working implement according to claim 9,
**characterised in that** all cable exits (34 to 37 and 44 to 47) located in the edge (25) of the housing (14) in a lateral high side (22, 24) are located below a central plane (21) of a back plate (16).

16. Working implement according to claim 8,
**characterised in that** the housing (14) has a base (17), and **in that** the electric terminal box (13) is located in the upper end region of the back plate (16) below the upper narrow side (23) of the housing (14) opposite the base (17), a cable exit (34, 44) being preferably formed in the upper narrow side (23) on each side of the terminal box (13).

17. Working implement according to any of claims 1 to 16,
**characterised in that** clamping webs (52) are provided on the channel walls (51) of the cable channel (30, 34), the clamping webs (52) of one channel wall (51) being in particular offset relative to the clamping webs (52) of the opposite channel wall (51).

18. Working implement according to any of claims 1 to 17,
**characterised in that** the housing (14) of the battery pack (10) has a base which is designed as a standing foot (70).

## Revendications

1. Appareil de travail électrique avec un consommateur électrique (3) qui est alimenté à partir d'une batterie rechargeable (10) logée dans un boîtier (14), étant précisé que le consommateur électrique (3) est relié par un câble de raccordement électrique (12) à la batterie (10),
**caractérisé en ce que** le boîtier (14) avec la batterie (10) est conçu comme une unité de construction (11), séparée du consommateur électrique (3) et apte à être portée sur le dos, qui comporte une paroi de boîtier dans laquelle est formé un conduit pour câble (30, 40), étant précisé que le conduit pour câble (30, 40) comporte, dans le bord (25) du boîtier (14), une sortie de câble (34, 35, 36, 37; 44, 45, 46, 47).

2. Appareil de travail selon la revendication 1,
**caractérisé en ce qu'**il est prévu dans le bord (25) du boîtier (14) au moins deux sorties de câble (34 à 37 et 44 à 47), qui sont espacées d'une distance (u, v, w) mesurée dans le sens périphérique du bord de boîtier (25).

3. Appareil de travail selon la revendication 1 ou 2,
**caractérisé en ce que** le conduit pour câble (30, 40) est conçu comme une rainure.

4. Appareil de travail selon l'une des revendications 1 à 3,
**caractérisé en ce que** le conduit pour câble (30, 40) est logé dans un espace de construction (60) entre une plaque dorsale (16) du boîtier (14) et l'ensemble d'éléments (6) disposé dans le boîtier (14), et est ouvert vers la surface extérieure (26) de la paroi de boîtier.

5. Appareil de travail selon la revendication 4,
**caractérisé en ce que** le conduit pour câble (30, 40) se trouve dans la plaque dorsale (16).

6. Appareil de travail selon la revendication 4 ou 5,
**caractérisé en ce que** le conduit pour câble (30, 40) est logé dans un espace de construction (60) entre la surface extérieure (26) de la plaque dorsale (16) et l'ensemble d'éléments (6) disposé dans le boîtier (14) de la batterie (10), et est ouvert vers la surface extérieure (26) de la plaque dorsale (16).

7. Appareil de travail selon l'une des revendications 4 à 6,
**caractérisé en ce que** l'espace de construction (60) est un espace vide.

8. Appareil de travail selon l'une des revendications 5 à 7,
**caractérisé en ce qu'**une boîte de raccordement électrique (13) est disposée, encastrée, dans la plaque dorsale (16), et le conduit pour câble (30, 40) s'étend, de préférence encastré dans la plaque dorsale (16), de la boîte de raccordement (13) jusqu'à la sortie de câble (34 à 37 et 44 à 47).

9. Appareil de travail selon l'une des revendications 2 à 8,
**caractérisé en ce que** plusieurs sorties de câble (34 à 37 et 44 à 47) se trouvent dans un petit côté du boîtier (14), étant précisé que de préférence les sorties de câble (35 à 37, 45 à 47) se trouvent dans le côté haut (22, 24) du boîtier (14).

10. Appareil de travail selon l'une des revendications 5 à 8,
**caractérisé en ce que** la plaque dorsale (16) présente un axe longitudinal médian vertical (20), et il est prévu des deux côtés de l'axe longitudinal médian (20) au moins une sortie de câble (34 à 37, 44 à 47) dans le bord (25) du boîtier (14).

11. Appareil de travail selon l'une des revendications 1 à 10,
**caractérisé en ce qu'**une partie terminale (35a, 36a, 37a ; 45a, 46a, 47a) qui débouche dans la sortie de câble (35 à 37, 45 à 47) définit avec le côté haut (22, 24) un angle de sortie (39, 49) différent de 90°, étant précisé que de préférence l'angle de sortie (39, 49) est inférieur à 90°, et est en particulier d'environ 45°, et est tourné avec son ouverture d'angle vers le fond (17) du boîtier (14).

12. Appareil de travail selon l'une des revendications 1 à 11,
**caractérisé en ce que** le conduit pour câble (30, 40) se ramifie en direction du petit côté du boîtier (14) par l'intermédiaire d'un embranchement (31, 32, 33; 41, 42, 43) vers une autre sortie de câble (34, 35, 36; 44, 45, 46).

13. Appareil de travail selon la revendication 12,
**caractérisé en ce qu'**au moins les parties terminales (35a, 36a, 37a, 45a, 46a, 47a) du conduit pour câble (30, 40) qui débouchent dans les sorties de câble (35, 36, 37; 45, 46, 47) sont à peu près parallèles.

14. Appareil de travail selon la revendication 12 ou 13,
**caractérisé en ce que** toutes les sorties de câble (34 à 37 et 44 à 47) sont reliées, sur un côté d'un axe longitudinal médian vertical (20) d'une plaque dorsale (16), à un conduit pour câble (30, 40) commun.

15. Appareil de travail selon la revendication 9,
**caractérisé en ce que** toutes les sorties de câble (35 à 37 et 45 à 47) situées dans le bord (25) du boîtier (14) dans un côté haut latéral (22, 24) se trouvent au-dessous d'un plan médian (21) d'une plaque dorsale (16).

16. Appareil de travail selon la revendication 8,
**caractérisé en ce que** le boîtier (14) comporte un fond (17), et la boîte de raccordement électrique (13), dans la zone d'extrémité supérieure de la plaque dorsale (16), est disposée au-dessous du petit côté supérieur (23) du boîtier (14) opposé au fond (17), étant précisé que de préférence dans ledit petit côté supérieur (23), une sortie de câble respective (34, 44) est formée des deux côtés de la boîte de raccordement (13).

17. Appareil de travail selon l'une des revendications 1 à 16,
**caractérisé en ce que** des pattes de serrage (52) sont formées sur les parois (51) du conduit pour câble (30, 40), étant précisé en particulier que les pattes de serrage (52) d'une paroi de conduit (51) sont décalées par rapport aux pattes de serrage (52) de la paroi de conduit (51) opposée.

18. Appareil de travail selon l'une des revendications 1 à 17,
**caractérisé en ce que** le boîtier (14) de la batterie (10) comporte un fond conçu comme un pied d'appui (70).
